# FASCICULE DE BREVET EUROPEEN

(11) **EP 1 379 883 B1**
(45) Date de publication et mention de la délivrance du brevet: **14.05.2008**
(21) Numéro de dépôt: 02727661.7
(22) Date de dépôt: 16.04.2002
(51) Int. Cl.: G01P 3/486

(54) **DISPOSITIF DE LECTURE DE VITESSE DE ROTATION POUR PULVERISATEUR DE PEINTURE A BOL TOURNANT**
VORRICHTUNG ZUM AUSLESEN DER DREHGESCHWINDIGKEIT EINER ROTIERENDEN FARB-SPRÜHGLOCKE
DEVICE FOR READING THE ROTATIONAL SPEED OF A PAINT SPRAYER PROVIDED WITH A ROTATING BOWL

(30) Priorité: 20.04.2001 FR 0105408
(43) Date de publication de la demande: 14.01.2004
(73) Titulaire: EISENMANN Anlagenbau GmbH & Co. KG, 71032 Böblingen (DE)
(72) Inventeur: DOBROWOLSKI, Flavien, F-38650 Sinard (FR)
(74) Mandataire: Ostertag, Ulrich
(86) Numéro de dépôt international: PCT/FR2002/001309
(87) Numéro de publication internationale: WO 2002/086515

(56) Documents cités:
- EP-A- 0 356 085
- DE-A- 3 002 206
- DE-A- 4 306 800

## Description

La présente invention concerne, de façon générale, le domaine technique des appareils de pulvérisation de peinture, ou autre produit de revêtement analogue, comportant un bol de pulvérisation tournant, entraîné en rotation à grande vitesse, autour de son axe, par une turbine logée dans le corps du pulvérisateur, la turbine étant elle-même mise en rotation par un flux d'air. En particulier, l'invention s'intéresse à des tels pulvérisateurs de peinture montés à l'extrémité d'un bras de robot, ou sur une machine multi-axes analogue, tels qu'utilisés dans les lignes de peinture automatisées de carrosseries de véhicules automobiles. Encore plus particulièrement, cette invention a pour objet un dispositif de lecture de la vitesse de rotation de la turbine, donc du bol tournant, pour les pulvérisateurs de peinture du genre ici concerné.

Dans ce genre de pulvérisateurs, la turbine, liée en rotation au bol tournant, est en général entraînée en rotation par un débit ou une pression d'air, délivré par une vanne proportionnelle elle-même commandée en fonction de l'écart entre la vitesse de rotation réelle et la valeur de consigne de cette vitesse. Un dispositif de lecture de la vitesse de rotation réelle de la turbine est donc déjà nécessaire, en vue de la régulation de cette vitesse.

De plus, dans le cas où la roue à aubes de la turbine comprend des pales de freinage, le freinage de cette turbine peut être commandé soit par une vanne d'air pilotée en "tout ou rien", soit par une vanne proportionnelle qui permet de doser le freinage. Dans tous les cas, la commande de freinage est interrompue bien avant l'arrêt complet de la turbine car, le système ne comportant pas d'éléments discriminant le sens de rotation, si la turbine venait à tourner en sens inverse c'est-à-dire dans le sens de l'action de freinage, l'injection d'air en vue du freinage ne ferait qu'accélérer la rotation dans le mauvais sens, et il ne serait plus possible d'arrêter la turbine.

Or pour la sécurité du personnel d'entretien, il n'est pas possible à celui-ci d'entrer dans les cabines de peinture, aussi longtemps que les turbines des pulvérisateurs ne sont pas arrêtées. Si le freinage est interrompu par exemple à une vitesse de rotation de 10000 tours/minute, il faudrait encore attendre de longues dizaines de secondes avant que la turbine s'arrête d'elle-même. Ainsi, un contrôle approprié de la vitesse de rotation de la turbine, si possible avec discrimination du sens de rotation, est aussi souhaitable lors des phases de freinage, pour des raisons de sécurité.

En pratique, pour la réalisation du dispositif de lecture de la vitesse de rotation de la turbine, les exigences à respecter sont les suivantes :
- L'information relative à la vitesse doit être transmise à distance du pulvérisateur, en passant par le bras du robot ou de la machine de peinture.
- Le dispositif de transmission à distance du signal significatif de la vitesse doit pouvoir être connecté/déconnecté très rapidement, pour permettre l'échange d'un pulvérisateur sans immobiliser trop longtemps la ligne de production.
- Dans la mesure où une haute tension électrique de l'ordre de 100 kvolts est en général utilisée sur le pulvérisateur, pour charger électriquement la peinture qui est du type électrostatique, le dispositif de lecture de vitesse doit être du type à isolation galvanique entre la haute tension et le signal de mesure proportionnel à la vitesse, ce qui conduit à recourir par exemple à des solutions optiques.

A cet effet, il est déjà connu de prévoir, à l'arrière de la turbine, un disque tournant avec cette turbine, disque en face duquel est positionnée l'extrémité d'une fibre optique, cet état de la technique étant indiqué par exemple dans le brevet US 5704977 (ou son équivalent le brevet allemand DE 4306800 C2). Le disque tournant dispose d'une succession de zones opaques et réfléchissantes de telle sorte que la lumière émise par une source lumineuse peut être réfléchie et conduite par une fibre optique jusqu'à un capteur permettant de détecter à chaque instant la présence de lumière réfléchie ou non. Ainsi, en général, la mesure de vitesse obtenue est sous forme d'un signal fréquentiel dont la fréquence est l'image de la vitesse de rotation de la turbine. Les systèmes classiques de régulation de la vitesse de rotation se proposent de mesurer cette fréquence en comptant le nombre de « tops » dans un temps donné. La théorie des systèmes asservis précise que pour avoir une régulation performante c'est-à-dire précise, rapide et stable, il est fondamental que le temps d'échantillonnage, c'est-à-dire l'intervalle de temps entre deux mesures successives, doit être faible par rapport au temps de réponse global du système. Or dans le principe de mesure précédemment défini, il est nécessaire d'avoir un nombre significatif de tops afin que la mesure soit précise, ce qui conduit à allonger le temps de mesure de la vitesse. Ainsi à 1200 tours/minute, pour un disque sur lequel ont été gravées une zone blanche et une zone sombre, il n'y a que 20 tops par seconde ce qui signifie, pour un temps de mesure de 100ms, uniquement 2 tops. La conséquence est qu'il n'est pas possible de réduire suffisamment la période d'échantillonnage, même si on augmente le nombre de zones opaques et réfléchissantes présentes sur le disque tournant.

Selon une possibilité indiquée dans les documents précités, l'extrémité du bras du robot de peinture porte une fibre optique rigide qui, lorsque le pulvérisateur est en place, traverse d'arrière en avant le corps de ce pulvérisateur pour venir, par son extrémité libre avant, en regard du disque lié en rotation à la turbine. Cette solution évite de recourir à une connexion optique, mais elle comporte l'inconvénient majeur qu'en cas de retrait du pulvérisateur, la fibre optique rigide saillante représente un danger pour les personnes intervenantes, et risque d'tre elle-mme détériorée par des contacts ou des chocs.

Selon une autre solution, décrite en détail dans les documents précités, une première fibre optique rigide est montée dans le corps du pulvérisateur, cette fibre optique s'étendant depuis le disque lié à la turbine jusqu'à l'arrière du pulvérisateur. Une autre fibre optique est montée dans le bras du robot de peinture, jusqu'à l'extrémité de ce bras sur laquelle est fixé de manière détachable le pulvérisateur. Au niveau du plan de montage du pulvérisateur, aussi désigné comme"plan de pose", il est prévu un connecteur de fibres optiques, permettant de raccorder mécaniquement l'extrémité arrière de la première fibre optique, logée dans le corps du pulvérisateur, à l'extrémité avant de l'autre fibre optique, montée dans le bras du robot.

Cette solution évite d'avoir une fibre optique saillante à l'avant du bras du robot, lorsque le pulvérisateur est retiré. Toutefois, elle nécessite un composant supplémentaire spécifique, à savoir le connecteur de fibres optiques, ainsi que des opérations manuelles de connexion/déconnexion.

De plus, dans les deux solutions connues précédemment évoquées, une fibre optique s'étend sur la longueur du bras du robot de peinture. Or une telle fibre optique résiste mal aux mouvements de flexion et surtout de torsion auxquels elle est soumise par suite des mouvements du bras, au cours du fonctionnement du robot de peinture.

DE 30 02 206 A1 décrit un dispositif destiné à régler la vitesse de travail d'un moteur utilisé dans un système de distribution et d'atomisation de matière, comportant une entrée de signaux de commande du moteur. Le dispositif comporte un émetteur de signaux optiques, un récepteur de signaux optiques, des organes constituant un coupleur optique, des organes reliant le coupleur optique au moteur afin que le coupleur soit entraîné par le moteur. Le coupleur optique transmettant sélectivement le signal de l'émetteur optique au récepteur de signaux optiques afin de produire un signal optique de sortie représentatif de la rotation du moteur, un élément étant destiné à convertir le signal optique de sortie en un signal de commande du moteur, et un élément reliant le convertisseur à l'entrée des signaux de commande du moteur afin de régler la vitesse de ce dernier.

EP 0 356 085 A2 décrit un capteur pour la surveillance d'une vitesse de rotation d'un moteur électrique qui est utilisé pour un dispositif d'atomisation électrostatique rotatif. Le capteur comporte une source lumineuse sensible à un signal électrique d'entrée pour augmenter ou diminuer la puissance de sortie, un détecteur de lumière pour surveiller l'intensité lumineuse, une source de tension relié à la source lumineuse pour établir un maximum et un minimum d'intensité lumineuse désiré, et un comparateur de fenêtre pour comparer le signal détecté au maximum et au minimum des intensités lumineuses désiré. Les signaux optiques de la source lumineuse sont transmis sur une première fibre de verre à une disque tournante, qui comporte des segments aux facteurs réflexion différents, fixée au moteur électrique. La réponse de signal est transmis sur une deuxième fibre de verre au détecteur.

La présente invention vise à éviter tous les inconvénients précédemment exposés, en fournissant, pour un pulvérisateur de peinture à bol tournant, un dispositif perfectionné de lecture de vitesse de rotation, permettant le retrait aisé du pulvérisateur sans nécessité d'un connecteur de fibre optique, une seule fibre optique étant suffisante et les problèmes de torsion de fibre optique dans le bras étant éliminés.

A cet effet, l'invention a essentiellement pour objet un dispositif de lecture de vitesse de rotation pour pulvérisateur de peinture à bol tournant, entraîné en rotation par une turbine logée dans le corps du pulvérisateur, monté à l'extrémité d'un bras de robot ou sur une machine multi-axes analogue, le dispositif de lecture utilisant un disque situé à l'arrière de la turbine, et tournant avec cette turbine, qui coopère avec l'extrémité avant d'au moins un guide de lumière du genre fibre optique traversant le corps du pulvérisateur, ce dispositif de lecture étant caractérisé en ce que ledit guide de lumière, du genre fibre optique, s'interrompt à l'arrière du corps du pulvérisateur, et en ce que sont prévus sur le plan de pose du pulvérisateur, à l'extrémité du bras de robot ou machine multi-axes analogue, des moyens opto-électroniques émetteurs et récepteurs, situés en regard de l'extrémité arrière dudit guide de lumière et incluant notamment des moyens de conversion du signal optique réfléchi, véhiculé par le guide de lumière du pulvérisateur, en un signal électrique, tandis qu'est placé, dans le bras de robot ou machine multi-axes analogue, au moins un câble électrique prévu pour véhiculer le signal électrique résultant de ladite conversion.

Ainsi, l'idée à la base de la présente invention consiste à localiser les moyens de conversion opto-électroniques, tant émetteurs que récepteurs, au niveau du plan de pose du pulvérisateur, directement en regard de la face arrière du pulvérisateur (lorsque celui-ci est mis en place) et, plus particulièrement, en regard de l'extrémité postérieure du guide de lumière, tel que fibre optique, incorporé au pulvérisateur. Aucune autre fibre optique n'est nécessaire dans le bras du robot, où le signal représentatif de la vitesse captée est un signal électrique, véhiculé par un câble électrique à basse tension de type "robotique", du commerce, qui peut accepter sans problèmes les flexions et torsions auxquelles il est soumis lors des mouvements du bras. De plus, la conversion des signaux optiques en signaux électriques s'effectuant au niveau du plan de pose du pulvérisateur, toute connexion de fibres optiques à ce niveau est rendue inutile. Les moyens opto-électroniques actuellement disponibles, tels qu'émetteur laser, sont de dimensions suffisamment réduites pour pouvoir prendre place à l'extrémité du bras de robot, en tenant compte aussi des connexions, notamment des circuits d'air et électriques, et aussi, bien entendu, de l'arrivée de peinture, à réaliser au niveau du plan de pose du pulvérisateur.

Selon une forme de réalisation avantageuse du dispositif de lecture de vitesse de rotation pour pulvérisateur de peinture, objet de l'invention, le disque situé à l'arrière de la turbine du pulvérisateur, et coopérant avec l'extrémité avant du guide de lumière traversant le corps du pulvérisateur, possède une alternance de secteurs clairs et sombres d'étendues angulaires différentes, permettant une discrimination du sens de rotation de la turbine par analyse de l'ordre de succession des signaux correspondants, différenciés par leurs durées respectives.

En pratique, le disque lié à la turbine dispose ici de secteurs alternativement blancs et noirs, d'angles différents, et l'unité électronique de traitement des signaux électriques, fournis par les moyens de conversion des signaux optiques, analyse automatiquement les successions de zones blanches et noires ainsi détectées, afin de déterminer le sens de rotation instantané de la turbine, et de générer un signal représentatif de ce sens de rotation, qui est délivré au module de contrôle de vitesse. Ainsi, on dispose à la fois d'une information de vitesse et d'une information de sens de rotation, ce qui rend possible le freinage de la turbine jusqu'à une vitesse pratiquement nulle, de manière à résoudre aussi le problème de sécurité exposé précédemment.

Certes, lorsque la turbine tourne à très grande vitesse, il peut devenir difficile de distinguer optiquement et électroniquement les différents secteurs du disque, car les temps correspondants deviennent trop courts. Toutefois, ceci ne constitue pas un inconvénient puisqu'il est seulement intéressant de connaître le sens de rotation de la turbine à relativement basse vitesse, lors des phases de freinage, où cette difficulté n'existe plus. Ainsi, le sens de rotation peut n'être pris en compte que pour une vitesse de rotation mesurée de la turbine inférieure à un seuil prédéterminé, par exemple fixé à 10000 tours/minute, seuil au-dessous duquel sa détermination devient certaine et utile.

Avantageusement, afin d'obtenir une mesure de la vitesse de rotation permettant de réaliser un bon asservissement de cette vitesse, l'unité électronique ne mesurera pas la fréquence de rotation par un comptage du nombre de « tops » mais le temps entre deux zones blanche et noire de référence décrivant un tour complet de la turbine. Ce temps est mesurable à chaque tour de la turbine et donne une information précise de la vitesse, aussi bien à basse vitesse qu'à vitesse élevée.

En pratique, la partie électronique du dispositif pourra comprendre, en sortie d'un phototransistor de réception, un convertisseur mesurant le temps que met la turbine pour effectuer un tour complet ou une fraction de tour. La sortie du convertisseur fournit ainsi un signal électrique qui est l'image de la vitesse mesurée, et elle est reliée à une ligne véhiculant ce signal électrique vers un module de contrôle de la vitesse de la turbine. Ce signal électrique est, notamment, un signal analogique proportionnel à la vitesse mesurée.

L'invention sera mieux comprise à l'aide de description qui suit, en référence au dessin schématique annexé représentant, à titre d'exemple, une forme d'exécution de ce dispositif de lecture de vitesse de rotation pour pulvérisateur de peinture à bol tournant :
Figure 1 montre, sous forme de schéma de principe, un pulvérisateur monté à l'extrémité du bras d'un robot de peinture, l'ensemble étant équipé du dispositif de lecture de vitesse de rotation conforme à l'invention ;
Figure 2 représente le même ensemble, le pulvérisateur étant séparé du bras de robot ;
Figure 3 est une vue de face du disque du dispositif de lecture de vitesse ;
Figure 4 est un diagramme illustrant les signaux obtenus avec le disque de la figure 3, pour un tour de ce disque ;
Figure 5 représente, sous forme de schéma synoptique, la partie électronique de ce dispositif de lecture de vitesse.

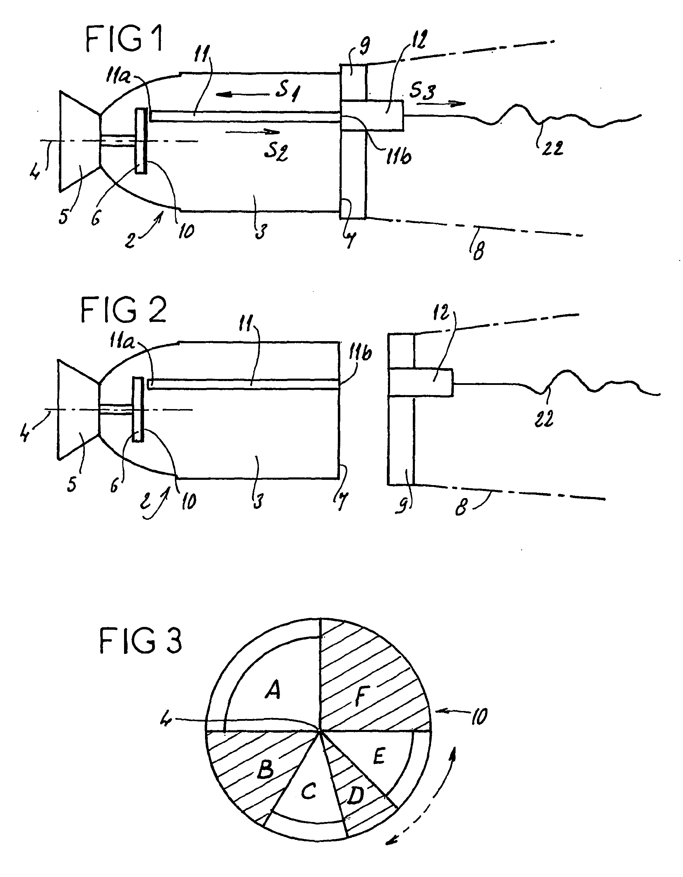

Comme le montrent schématiquement les figures 1 et 2, un pulvérisateur de peinture à bol tournant, désigné dans son ensemble par la référence 2, possède un corps 3 à l'avant duquel est monté tournant, autour d'un axe central 4, un bol de pulvérisation 5. Le bol tournant 5 est lié en rotation à une turbine 6, logée dans le corps 3 du pulvérisateur 2 et soumise à un flux d'air amené par des conduits ici non représentés.

Le corps 3 du pulvérisateur 2 est prévu pour être monté de façon séparable, par sa face arrière 7, à l'extrémité avant du bras 8 (représenté très sommairement) d'un robot de peinture, ou machine multi-axes analogue. A cet effet, l'extrémité avant du bras 8 comporte une plaque de raccordement 9, définissant le "plan de pose" contre lequel est fixé, de façon démontable, le pulvérisateur 2. La plaque 9 comporte un ensemble de connexions fluidiques et électriques, ici non représentées car non directement concernées par la présente invention ; ces connexions incluant, entre autres, les raccordements des circuits d'air pour l'entraînement en rotation et le freinage de la turbine 6. La figure 1 montre le pulvérisateur 2 monté à l'extrémité du bras 8, tandis que la figure 2 montre le même pulvérisateur 2 séparé de ce bras 8.

Le dispositif de lecture de vitesse de rotation, objet de l'invention, permet de mesurer la vitesse de rotation instantanée de la turbine 6, donc du bol tournant 5. Accessoirement, ce dispositif détermine aussi le sens de rotation de la turbine 6.

Ce dispositif de lecture de vitesse comprend un disque 10, situé à l'arrière de la turbine 6, et pouvant présenter l'aspect illustré sur la figure 3. La surface du disque 10 est divisée ici en six secteurs désignés de A à F, soit trois secteurs clairs, notamment blancs A, C et E, qui alternent avec trois secteurs sombres, notamment noirs B, D et F. Ces secteurs, plus particulièrement les secteurs sombres B, D et F, possèdent des étendues angulaires différentes les unes des autres, par exemple :
- le secteur sombre B est de 60° ;
- le secteur sombre D est de 30° ;
- le secteur sombre F est de 90°.

Les secteurs clairs A, C et E peuvent, dans cet exemple, posséder les étendues angulaires suivantes :
- le secteur clair A est de 90° ;
- le secteur clair C est de 45° ;
- le secteur clair E est aussi de 45°.

A l'intérieur du corps 3 du pulvérisateur 2, en dehors de l'axe central 4 de ce pulvérisateur, est logée une fibre optique 11, utilisée comme guide de lumière. La fibre optique 11 traverse longitudinalement le corps 3 du pulvérisateur 2, l'extrémité avant 11a de la fibre optique 11 étant placée en regard du disque 10, tandis que l'extrémité arrière 11 b de cette fibre optique 11 se situe au niveau de la face arrière 7 du corps 3 du pulvérisateur 2.

Le dispositif de lecture de vitesse comprend aussi, monté au niveau de la plaque 9 donc du "plan de pose" du pulvérisateur, un sous-ensemble opto-électronique 12 à la fois émetteur et récepteur. Ce sous-ensemble 12 est disposé, sur la plaque 9, de manière à se trouver en regard de l'extrémité arrière 11 b de la fibre optique 11 du pulvérisateur 2, lorsque ce pulvérisateur 2 est monté sur l'extrémité du bras 8 (voir figure 1).

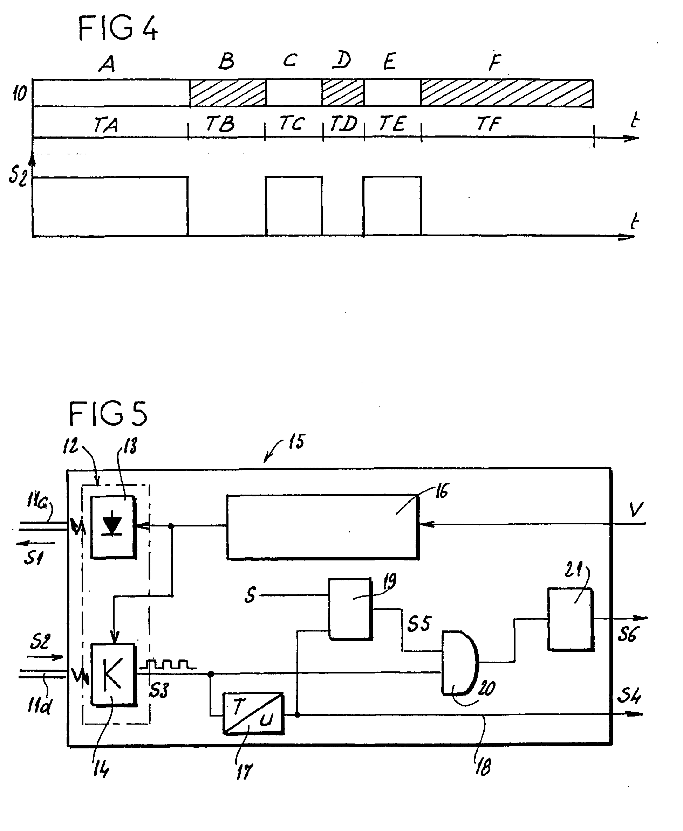

Comme le montre plus en détail la figure 5, le sous-ensemble opto-électronique 12, prévu au niveau du "plan de pose", comprend par exemple, en tant que composant émetteur, une source lumineuse telle qu'une diode laser 13 et, en tant que composant récepteur, un phototransistor 14. La diode laser 13 est placée en regard de l'extrémité arrière de la partie "émission" 11c de la fibre optique 11. Le phototransistor 14 est, quant à lui, placé en regard de l'extrémité arrière de la partie "réception" 11 d de la fibre optique 11. Les deux parties, respectivement émettrice 11 c et réceptrice 11 d, de la fibre optique 11, représentées séparées (de façon exagérée) sur la figure 5, sont avantageusement réunies à l'intérieur du corps 3 du pulvérisateur, pour constituer une fibre optique 11 unique.

La figure 5 montre encore l'ensemble électronique 15 du dispositif de lecture de vitesse. Cet ensemble électronique 15 comprend une unité d'alimentation électrique 16, recevant une tension d'alimentation extérieure V, et alimentant entre autres la diode laser d'émission 13 et le phototransistor de réception 14. En sortie du phototransistor 14, il est prévu un convertisseur fréquence/tension 17, dont la sortie est dirigée vers :
- une ligne 18 véhiculant un signal électrique représentatif de la vitesse instantanée mesurée ;
- une première entrée d'un comparateur 19.

Le comparateur 19 possède une deuxième entrée, recevant une valeur de seuil S de la vitesse, par exemple choisie égale à 10000 tours/minute. La sortie du comparateur 19 est reliée à une entrée d'une porte ET 20, dont l'autre entrée est reliée à la sortie du phototransistor 14. Enfin, la sortie de cette porte ET 20 est reliée à un module 21 de détection du sens de rotation.

En se référant à nouveau aux figures 1 et 2, le sous-ensemble opto-électronique 12, et les autres composants éventuellement associés à ce sous-ensemble, sont raccordés par un câble électrique 22, s'étendant à l'intérieur du bras 8, aux éléments de traitement et de régulation placés plus en arrière. Le câble électrique 22 est notamment un câble basse tension, de type "robotique".

Le fonctionnement d'ensemble du dispositif de lecture de vitesse, précédemment décrit, est le suivant :

La diode laser 13, alimentée électriquement par l'unité d'alimentation 16, émet sur la partie "émission" 11 c de la fibre optique 11 un signal lumineux incident S1, véhiculé jusqu'à l'extrémité avant 11a de la fibre optique 11. Cette extrémité 11a voyant alternativement "défiler" les secteurs clairs et sombres du disque 10, la partie "réception" 11d de la fibre optique 11 reçoit un signal lumineux réfléchi S2 haché, sous forme d'impulsions dont la fréquence moyenne F est proportionnelle à la vitesse de rotation du disque 10, donc de la turbine 6. Ce signal réfléchi S2 est reçu par le phototransistor 14, qui le convertit en un signal électrique haché S3 correspondant. Le convertisseur 17 transforme ce signal S3 en une tension électrique analogique S4, proportionnelle à la fréquence du signal S3, donc à la vitesse de rotation de la turbine 6. Le signal S4 est transmis, par la ligne 18, vers un module extérieur (non représenté) de contrôle de la vitesse de la turbine 6.

Dans le détail, la figure 4 illustre (pour un tour du disque 10) la forme du signal lumineux réfléchi S2, avec ses impulsions successives dont les longueurs et intervalles correspondent aux étendues angulaires respectives des secteurs A à F du disque 10. Les temps correspondants sont désignés respectivement par TA, TB, TC, TD, TE et TF. En raison des différences d'étendue angulaire des trois secteurs sombres B, D et F, les trois temps correspondants TB, TD et TF sont distincts (ces temps eux-mêmes étant évidemment variables, selon la vitesse de rotation de la turbine 6).

Selon le sens de rotation de la turbine 6, la séquence de succession des temps TB, TD et TF est différente. Pour un sens de rotation, la séquence est : TB - TD - TF. Pour le sens de rotation opposé, cette séquence devient : TF - TD - TB. Une mesure et analyse des temps TB, TD et TF permet ainsi de discriminer le sens de rotation de la turbine 6, du moins lorsque cette turbine tourne à une vitesse suffisamment faible pour permettre une mesure et une comparaison de ces temps.

La mesure du temps entre le début de deux secteurs A successifs, par exemple, permet de connaître avec précision la vitesse de rotation de la turbine 6 à chaque tour. Ainsi à titre d'ordre de grandeur, pour une vitesse de 1200 tours/minute le temps entre deux secteurs A successifs est de 50 ms ce qui permet d'avoir un temps d'échantillonnage suffisamment petit pour permettre un asservissement performant.

Ceci est mis en oeuvre dans l'ensemble électronique 15. A tout instant, le signal S3 est traité dans le convertisseur 17 qui mesure le temps que met la turbine 6 entre deux zones références et qui convertit ce temps en un signal électrique analogique S4 proportionnel à ce temps, donc représentatif de la vitesse de rotation. De plus, le signal électrique S4, image de la vitesse instantanée de rotation de la turbine 6, est comparé dans le comparateur 19 au seuil de vitesse S prédéfini. Le comparateur 19 délivre ainsi, à sa sortie, un signal logique S5 qui, par l'intermédiaire de la porte ET 20 recevant aussi le signal S3, autorise la détection du sens de rotation seulement si la vitesse de rotation instantanée est inférieure au seuil S. Dans ce dernier cas, le module de détection du sens de rotation 21 analyse le signal électrique S3, et il délivre à sa sortie un signal logique S6, par exemple sous la forme d'un signal du type "tout ou rien", représentatif du sens de rotation de la turbine 6.

Lorsque le pulvérisateur 2 est séparé du bras 8, comme l'illustre la figure 2, le sous-ensemble opto-électronique 12 reste en place sur le "plan de pose" et est prêt à fonctionner, de la manière expliquée précédemment, avec un autre pulvérisateur équipé de la même façon.

Sans que celà refasse partie de l'invention revendiquée, on pourrait modifier:
- les détails du disque 10, notamment le nombre des secteurs ou zones de ce disque et leurs angles ;
- la nature des composants émetteur et récepteur du sous-ensemble opto-électronique, qui peuvent être remplacés par tous équivalents, notamment en ce qui concerne la source lumineuse ;
- les détails de réalisation de l'ensemble électronique de traitement des signaux ;
- la nature et les particularités du robot de peinture, ou autre machine multi-axes, équipés de ce dispositif de lecture de vitesse.

## Revendications

1. Dispositif de lecture de vitesse de rotation pour pulvérisateur de peinture (2) à bol tournant (5), entraîné en rotation par une turbine (6) logée dans le corps (3) du pulvérisateur (2), monté à l'extrémité d'un bras (8) de robot ou sur une machine multi-axes analogue, le dispositif de lecture utilisant un disque (10) situé à l'arrière de la turbine (6), et tournant avec cette turbine (6), qui coopère avec l'extrémité avant (11 a) d'au moins un guide de lumière (11) du genre fibre optique traversant le corps (3) du pulvérisateur (2),
**caractérisé en ce que**
ledit guide de lumière (11), du genre fibre optique, est incorporé au pulvérisateur (2), et **en ce que** sont prévus à une plaque de raccordement (9), située à l'extrémité du bras (8) de robot ou machine multi-axes analogue et définissant un plan de pose, contre lequel est fixé, de façon démontable, le pulvérisateur (2), des moyens opto-électroniques émetteurs et récepteurs (12; 13; 14), situés en regard de l'extrémité arrière(11b) dudit guide de lumière (11) et incluant notamment des moyens de conversion (14) du signal optique réfléchi (S2), véhiculé par le guide de lumière (11) du pulvérisateur (2), en un signal électrique (S3), tandis qu'est placé, dans le bras (8) de robot ou machine multi-axes analogue, au moins un câble électrique (22) prévu pour véhiculer le signal électrique (S3) résultant de ladite conversion.

2. Dispositif de lecture de vitesse de rotation selon la revendication 1, **caractérisé en ce que** les moyens opto-électroniques (12), prévus sur le plan de pose (9) du pulvérisateur (2), à l'extrémité du bras (8) de robot ou machine multi-axes analogue, comprennent en tant que moyen émetteur une source lumineuse (13), telle que diode laser, et en tant que moyen récepteur un phototransistor (14), placés respectivement en regard des extrémités arrière respectives des parties "émission" (11 c) et "réception" (11 d) du guide de lumière (11) du pulvérisateur (2).

3. Dispositif de lecture de vitesse de rotation selon la revendication 1 ou 2, **caractérisé en ce que** le disque (10) situé à l'arrière de la turbine (6) du pulvérisateur (2), et coopérant avec l'extrémité avant (11a) du guide de lumière (11) traversant le corps (3) du pulvérisateur (2), possède une alternance de secteurs clairs (A, C, E) et sombres (B, D, F) d'étendues angulaires différentes, permettant une discrimination du sens de rotation de la turbine (6) par analyse de l'ordre de succession des signaux correspondants, différenciés par leurs durées respectives (TA à TF).

4. Dispositif de lecture de vitesse de rotation selon la revendication 3, **caractérisé en ce que** le sens de rotation n'est pris en compte que pour une vitesse de rotation mesurée de la turbine (6) inférieure à un seuil (S) prédéterminé, en particulier lors des phases de freinage.

5. Dispositif de lecture de vitesse de rotation selon la revendication 2 ou 3, **caractérisé en ce que** la partie électronique (15) de ce dispositif de lecture de vitesse comprend, en sortie du phototransistor de réception (14), un convertisseur (17) mesurant le temps que met la turbine (6) pour effectuer un tour complet ou une fraction de tour.

6. Dispositif de lecture de vitesse de rotation selon la revendication 5, **caractérisé en ce que** la sortie du convertisseur (17) fournit un signal électrique (S4) image de la vitesse mesurée, et est reliée à une ligne (18) véhiculant ce signal électrique (S4) vers un module de contrôle de la vitesse de la turbine (6).

7. Dispositif de lecture de vitesse de rotation selon la revendication 6, **caractérisé en ce que** le signal électrique (S4) est un signal analogique proportionnel à la vitesse mesurée.

## Claims

1. A device for reading speed of rotation for a paint sprayer (2) with rotating bowl (5), rotated by a turbine (6) housed in the body (3) of the sprayer (2), mounted at the end of a robot arm (8) or on a similar multi-axis machine, the reading device using a disk (10) situated at the rear of the turbine (6), and rotating with this turbine (6), which cooperates with the front and (11a) of at least one light guide (11) of the optical fiber kind, passing through the body (3) of the sprayer (2), **characterized in that** said light guide (11), of the optical fiber kind, is incorporated in the sprayer (2) and **in that** there are provided at a coupling plate (9), situated at the end of the robot arm (8) or similar multi-axis machine and defining a mounting plane, against which the sprayer (2) is fixed in a dismountable manner, opto electronic emitter and receiver means (12, 13, 14), situated with regard to the rear end (11b) of said light guide (11) and including in particular means (14) for converting the reflected optical signal (S2) conveyed by the light guide (11) of the sprayer (2) into an electrical signal (S3), while at least one electrical cable (22) provided for conveying the electrical signal (S3) resulting from said conversion is placed in the robot arm (8) or in the similar multiaxis machine.

2. The device for reading speed of rotation as claimed in claim 1, **characterized in that** the optoelectronic means (12), provided on the mounting plane (9) of the sprayer (2), at the end of the robot or similar multi-axis machine arm (8), comprise in the guise of emitter means a light source (13), such as laser diode, and in the guise of receiver means a phototransistor (14), which are placed respectively facing the respective rear ends of the "emission" part (11c) and "reception" part (11d) of the light guide (11) of the sprayer (2).

3. The device for reading speed of rotation as claimed in claim 1 or 2, **characterized in that** the disk (10) situated at the rear of the turbine (6) of the sprayer (2), and cooperating with the front end (11a) of the light guide (11) passing through the body (3) of the sprayer (2), possesses an alternation of light sectors (A, C, E) and dark sectors (B, D, F) of different angular breadths, allowing discrimination of the direction of rotation of the turbine (6) by analyzing the order of succession of the corresponding signals, differentiated by their respective durations (TA to TF).

4. The device for reading speed of rotation as claimed in claim 3, **characterized in that** the direction of rotation is disregarded other than for a measured speed of rotation of the turbine (6) less than a predetermined threshold (S), in particular during the braking phases.

5. The device for reading speed of rotation as claimed in claim 2 or 3, **characterized in that** the electronic part (15) of this device for reading speed comprises, at the output of the reception phototransistor (14), a converter (17) measuring the time taken by the turbine (6) to perform a complete revolution or a fraction of a revolution.

6. The device for reading speed of rotation as claimed in claim 5, **characterized in that** the output of the converter (17) yields an electrical signal (S4) which is the image of the measured speed, and is linked to a line (18) conveying this electrical signal (84) to a module for monitoring the speed of the turbine (6).

7. The device for reading speed of rotation as claimed in claim 6, **characterized in that** the electrical signal (S4) is an analog signal proportional to the measured speed.

## Patentansprüche

1. Einrichtung zur Ermittlung einer Rotationsgeschwindigkeit einer Farbsprüheinrichtung (2) mit einer rotierenden Glocke (5), die von einer im Gehäuse (3) der Farbsprüheinrichtung (2) angeordneten Turbine (6) in Rotation versetzt wird und die an einem Endbereich eines Roboterarms (8) oder an einer ähnlichen Mehrachsmaschine angebracht ist, wobei die Einrichtung eine Scheibe (10) umfasst, die an einer Rückseite der Turbine (6) angebracht ist und sich mit der Turbine (6) dreht und die mit dem vorderen Endbereich (11a) wenigstens eines Lichtleitmittels (11) zusammenwirkt, das optische Fasern aufweist und das Gehäuse (3) der Farbsprüheinrichtung (2) durchdringt,
**dadurch gekennzeichnet, dass**
das mit optischen Fasern ausgeführte Lichtleitmittel (11) in der Farbsprüheinrichtung (2) aufgenommen ist und dass an einer Anschlussplatte (9), die an dem Endbereich des Roboterarms (8) oder an der ähnlichen Mehrachsmaschine angeordnet ist und eine Halteebene definiert, an der in demontierbarer Weise die Farbsprüheinrichtung (2) angebracht ist, optoelektronische Sende- und Empfangsmittel (12, 13, 14) angeordnet sind, die dem hinteren Endbereich (llb) des Lichtleitmittels (11) zugewandt angeordnet sind und die insbesondere Wandlermittel (14) für das reflektierte optische Signal (S2), das vom Lichtleitmittel (11) der Farbsprüheinrichtung (2) übertragen wird, in ein elektrisches Signal (S3) umfassen, während in dem Roboterarm (8) oder in der ähnlichen Mehrachsmaschine wenigstens ein elektrisches Kabel (22) zur Übertragung des aus der Wandlung resultierenden elektrischen Signals (S3) vorgesehen ist.

2. Einrichtung zur Ermittlung einer Rotationsgeschwindigkeit nach Anspruch 1, **dadurch gekennzeichnet, dass** die an der Halteebene (9) der Farbsprüheinrichtung (2) am Endbereich des Roboterarms (8) oder der ähnlichen Mehrachsmaschine angeordneten optoelektronischen Mittel (12) als Sendemittel eine Leuchtquelle (13), insbesondere eine Laserdiode, umfassen und als Empfangsmittel einen Fototransistor (14) umfassen, die jeweils mit Bezug zu den hinteren "Sende"- (11c) und "Empfangs"-Endbereichen (11d) der Lichtleitmittel (11) der Farbsprüheinrichtung (2) angeordnet sind.

3. Einrichtung zur Ermittlung einer Rotationsgeschwindigkeit nach einem der Ansprüche 1 oder 2, **dadurch gekennzeichnet, dass** die am hinteren Ende der Turbine (6) der Farbsprüheinrichtung (2) angeordnete Scheibe (10), die mit dem vorderen Endbereich (11a) des das Gehäuse (3) der Farbsprüheinrichtung (2) durchdringenden Lichtleitmittels (11) zusammenwirkt, alternierend angeordnete helle Sektoren (A, C, E) und dunkle Sektoren (B, D, F) mit unterschiedlichen Winkelbreiten besitzt, die eine Unterscheidung der Richtung der Rotation der Turbine (6) durch Analyse der Abfolge von korrespondierenden Signalen, die sich durch ihre jeweilige Dauer (TA bis TF) unterscheiden, ermöglicht.

4. Einrichtung zur Ermittlung einer Rotationsgeschwindigkeit nach Anspruch 3, **dadurch gekennzeichnet, dass** die Drehrichtung nicht in Betracht gezogen wird, außer wenn die an der Turbine (6) gemessene Rotationsgeschwindigkeit einen vorgegebenen Schwellwert (S) unterschreitet, insbesondere während einer Bremsphase.

5. Einrichtung zur Ermittlung einer Rotationsgeschwindigkeit nach einem der Ansprüche 2 oder 3, **dadurch gekennzeichnet, dass** die Elektronikmittel (15) der Einrichtung zur Ermittlung der Rotationsgeschwindigkeit am Ausgang des Empfangs-Fototransistors (14) einen Wandler (17) aufweisen, der die von der Turbine (6) für die Durchführung einer vollständigen oder einer teilweisen Umdrehung benötigte Zeit misst.

6. Einrichtung zur Ermittlung einer Rotationsgeschwindigkeit nach Anspruch 5, **dadurch gekennzeichnet, dass** der Ausgang des Wandlers (17) ein elektrisches Signal (S4) ausgibt, das ein Abbild der gemessenen Geschwindigkeit ist und das an eine Leitung (18) bereitgestellt wird, die das elektrische Signal (S4) an eine Einheit (6) zur Steuerung der Turbinengeschwindigkeit überträgt.

7. Einrichtung zur Ermittlung einer Rotationsgeschwindigkeit nach Anspruch 6, **dadurch gekennzeichnet, dass** das elektrische Signal (S4) ein analoges Signal ist, das proportional zur gemessenen Geschwindigkeit ist.
